# EUROPEAN PATENT APPLICATION

(11) **EP 4 703 577 A1**
(43) Date of publication of application: **04.03.2026**
(21) Application number: 25198470.4
(22) Date of filing: 27.08.2025
(51) Int. Cl.: F02D 41/00, F02D 37/02, F02P 5/15, F02P 5/152, F02P 5/12, F02D 41/04, F02M 21/02

(54) **HYDROGEN COMBUSTION ENGINE TORQUE CONTROL**

(30) Priority: 27.08.2024 NL 2038504
(71) Applicant: DAF Trucks N.V., 5643 TW Eindhoven (NL)
(72) Inventor: DE JONG, Dirk-Jan, 5643 TW Eindhoven (NL)
(74) Representative: V.O.

(57) **Abstract**

A hydrogen combustion engine comprises a hydrogen fuel supply, an air supply, a fuel ignition device, a combustion chamber for converting the ignited hydrogen fuel to work, an exhaust for exhausting the exhaust gases from the combustion chamber, a turbo compressor for converting the remaining exhaust pressure to increased inlet pressure of the air supply and an engine controller, wherein the engine controller is arranged to vary the ignition timing of the ignition device from an early ignition timing in full engine load condition, to a delayed ignition timing in a low engine load condition of the hydrogen combustion engine to keep the exhaust pressure at an elevated level, irrespective of low or high engine load condition.

## Description

### FIELD OF INVENTION

The invention relates to a hydrogen combustion engine. One alternative for a CO2 free powertrain is a lean burn spark ignited H2-ICE (internal combustion engine) as this combines zero CO2 free capability with good efficiency. To maximize efficiency and power turbocharging the hydrogen combustion engine is a preferred option.

### DESCRIPTION OF THE PRIOR ART

Especially for a lean-burn engine, exhaust gas temperature may be too low at low loads for the chemical reaction in SCR-system to convert NOx. Lean-burn combustion technology is selected for low engine-out NOx and high efficiency, but involves more intake air than necessary for the combustion, which can be problematic for NOx forming and for temperature control of the NOx conversion catalyst.

A H2-ICE may, as most important remaining emission, produce NOx as result of high combustion temperatures. These emissions very rapidly increase when lambda is reduced, i.e. a ratio of air to fuel is reduced in transient conditions, i.e. when fuel supply has to be increased for torque increase, but at the same time the air supply lags behind.

While turbocharging can provide higher lambda values, and NOx levels below standards, under steady state conditions, they cannot do that under transient (load pickup) conditions as the turbocharger takes time to rev up. This causes a concern of NOx emissions when running transient cycles, where the turbo cannot keep up with air supply.

Of course, NOx emissions can be handled by NOX reduction aftertreatment systems (EAS) based on selective catalyst reduction (SCR). Typically these systems are capable of reducing NOx emissions by more than 98%.However, these systems only becomes truly effective at higher temperatures, e.g. when the temperature is above 200 °C.

This means that after a cold start there can be a period that the EAS is not fully active and NOx is not reduced efficiently. The NOx produced then may exceed the standards set out by EPA-'27 and EU7.

A number of improvements have been suggested:
by changing engine settings increasing the temperature EAS can be accelerated, in addition heaters or fuel burners may be provided in front of the EAS by e.g. burner of oxidation catalysts. This approach may result in EAS heatup times to be reduced by a factor of 6. This has a disadvantage of higher fuel consumption CO2 emissions;
by changing engine settings engine out NOx volumes may be decreased especially during EAS warmup. With diesel engines this is done with high EGR rates, (temporary) reducing engine out NOx by a factor 3, compared to normal operation. This also has a disadvantage of higher CO2 emissions.

However, for a lean burn hydrogen engine, engine out NOx values are mainly dependent on overall mass/fuel ratio and this is not easily reduced by EGR at higher lambda values. In addition increased EGR will decrease turbo pressure to build which delays the turbo response. In addition to the above further improvement have been suggested:
electric turbochargers or electric / mechanical driven auxiliary superchargers may improve and assist turbocharger pickup, e.g. with 2-stage turbo systems. Clearly this all adds to expense and complexity of H2-ICE system which reduces its attractiveness;
when priority is given to NOx values (as must be legally), this will reduce the engine transient response during EAS warmup, resulting in a slower vehicle response. This will reduce the attractiveness of the H2-ICE even further, as it already struggles to meet diesel engine response times.

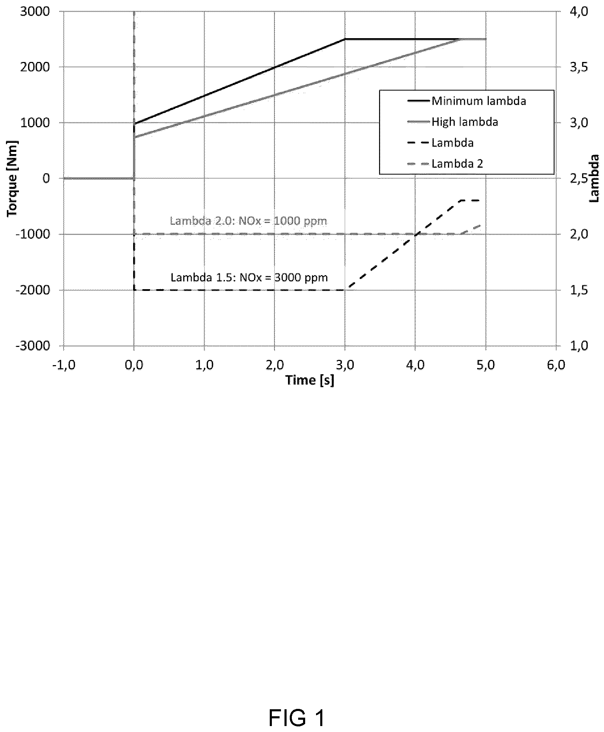

Figure 1 shows an schematic graph illustrating this effect. In the 'minimum lambda case' it is shown that the torque build up from e.g. 1000 Nm to 2500 Nm is 2 seconds faster but at a cost of increased NOx: at λ 1.5 this could amount to 3000 ppm compared to λ 2.0. At a higher lambda, NOx is lower, however the torque build up from 800 Nm to 2400 Nm is considerably slower than the minimum lambda case, about 1.5 seconds. Clearly such driving characteristics are difficult to accept.

### SUMMARY OF THE INVENTION

It is an object to provide a hydrogen combustion engine that is tuned to keep the NOx output at reduced levels, even when the EAS is low, while providing fast engine response times.

To this end a hydrogen engine is proposed according to the features of claim 1. In particular a hydrogen combustion engine according to the invention comprises a hydrogen fuel supply, an air supply, a fuel ignition device, a combustion chamber for converting the ignited hydrogen fuel to work, an exhaust for exhausting the exhaust gases from the combustion chamber, a turbo compressor for converting the remaining exhaust pressure to increased inlet pressure of the air supply and an engine controller, wherein the engine controller is arranged to vary the ignition timing of the ignition device from an early ignition timing in full engine load condition, to a delayed ignition timing in a low engine load condition of the hydrogen combustion engine to keep the exhaust pressure at an elevated level, irrespective of low or high engine load condition.

In other words, the ignition time of the hydrogen engine is delayed while fuel supply is elevated compared to early ignition timing in idle engine load condition, to keep the turbocharger at elevated speeds. This has the effect of increasing the engine out temperature and pressure, thereby increasing the backpressure and keeping the turbine at elevated speed, while at the same time the lean burn conditions are improved, resulting in lower NOx, and at the same time decreasing the heat up time.

### BRIEF DESCRIPTION OF THE DRAWINGS

The invention will be further elucidated in the figures:
Figure 1 shows a schematic graph;
Figure 2 shows an embodiment of an internal combustion engine arranged for reducing the emission of unburnt fuel;
Figure 3 shows a work stroke cycle (pressure volume cycle) diagram; and
Figure 4 shows two schematic diagrams.

### DETAILED DESCRIPTION

Unless otherwise defined, all terms (including technical and scientific terms) used herein have the same meaning as commonly understood by one of ordinary skill in the art to which this disclosure belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be further understood that the terms "comprises" and/or "comprising" specify the presence of stated features but do not preclude the presence or addition of one or more other features.

While example embodiments are shown for systems and methods, also alternative ways may be envisaged by those skilled in the art having the benefit of the present disclosure for achieving a similar function and result. E.g. some components may be combined or split up into one or more alternative components. Finally, these embodiments are intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the scope of the present systems as set forth in the claims that follow. The specification and drawings are accordingly to be regarded in an illustrative manner and are not intended to limit the scope of the appended claims.

A controller, in particular, an engine controller arranged to vary the ignition timing of an ignition device can be provided by circuitry or programming, by lookup tables or a combination thereof, by means known to the skilled person. Similarly, air and fuel supply can be controlled by controlling air inlet supply devices, controlling boost pressure by turbocompressor settings and additional air flow or fuel flow controllers or a combination thereof.

Any reference signs in the claims do not limit their scope; several "means" may be represented by the same or different item(s) or implemented structure or function; any of the disclosed devices or portions thereof may be combined together or separated into further portions unless specifically stated otherwise. The mere fact that certain measures are recited in mutually different claims does not indicate that a combination of these measures cannot be used to advantage.

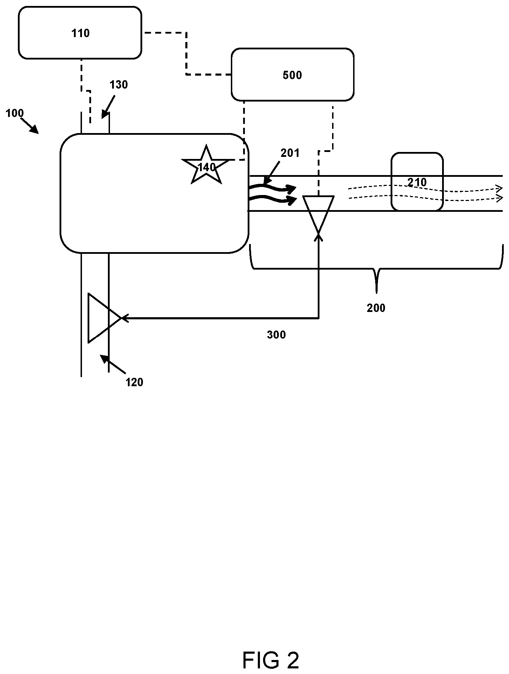

Turning now to Figure 2, there is illustrated an embodiment of an hydrogen internal combustion engine 100. Advantageously, hydrogen and air are premixed before ignition of the mixture, to provide combustion. Ignition can be realized in any particular way, e.g. through a spark plug, a laser or prechamber, or compression ignition mechanism 140. The hydrogen engine may be of a type were the hydrogen is injected in the intake manifold, (PFI) as well as engines were the hydrogen is directly injected (DI) in the cylinder to mix with air before ignition, typically right after intake valve closing. According to the invention, advantageously combustion of the mixture, in low torque cycles, is delayed until after 20 degrees after top dead center to keep boost pressure at elevated levels. As the boost pressure is kept substantially constant with load changing torque increase can be provided in fast transients substantially without any drop in air fuel ratio.

While in principle any hydrogen combustion engine may benefit from the inventive principle, for engines that rely on compression ignition, like dual fuel compression ignition, the ignition timing window is limited to only typically less than 20 degrees after top dead center.

The internal combustion engine 100 comprises an air intake 120, a fuel supply 130, and a fuel supply system 110. The fuel supply system 110 is arranged for supplying an amount of hydrogen to the internal combustion engine. The air intake 120 is controlled by a turbo compressor 300.

The internal combustion engine 100 further comprises an exhaust 200 for transporting the exhaust gas 201 from the internal combustion engine 100 through an engine after treatment system 210 (EAS), including selective catalytic reactor for removing NOx from the exhaust gases, to the environment.

The internal combustion engine 100 further comprises an engine management system 500 arranged to control the ignition timing, air supply 120 and fuel supply, aimed at regulating the torque, while keeping the boost pressure after expansion substantially on par with the boost pressure at the full load values. This can be achieved through a combination of ignition timing, air and fuel supply.

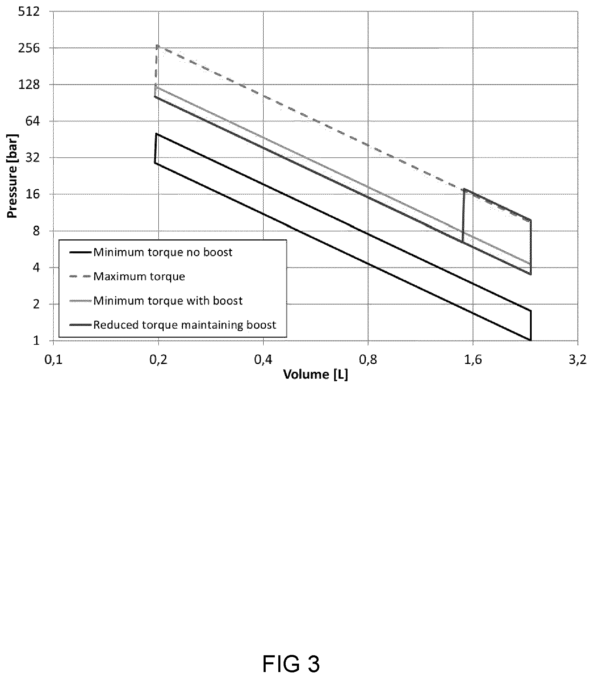

In Figure 3 a work stroke cycle (pressure volume cycle) diagram is shown comparing a 'no boost' cycle to a boosted cycle. Obviously by boosting the engine, the air massflow and resulting combustion power is increased, resulting in higher mean pressure of the stroke cycle.

For the boosted work cycles, three cases are shown:
i) A maximum torque work cycle: a maximum torque (i.e. maximum pressure, maximum work) is generated with elevated fuel supply and combustion in the early phase of the expansion, near top dead center (with minimum volume) of the expansion stroke, raising the pressure level quickly to a high pressure of about 250 bar ensuring maximum conversion from fuel energy to work. This is indicated by the dotted area, representing the engine work, and with expanding cylinder volume, lowering it to a rest pressure of about 8 bar prior to exhaust, which is still higher than the inlet (boost) pressure and then to about 4 bar exhaust pressure.
ii) A minimum torque work cycle (e,g, around idle engine speed, for low torque demand): in this cycle combustion is, similarly to the maximum torque work cycle, carried out at the beginning or early in the expansion stroke, at minimum fuel supply. Due to the low fuel supply, the work (area of the cycle) is kept minimal, and the engine speed is likewise minimal (idle), resulting in a pressure drop of the exhaust pressure to about 4 bar. This, however, also reduces the pressure after expansion and with that the energy to the turbocharger. This reduces its power so boost pressure will drop.
iii) A third case is shown, according to the invention, where, at lower torque demand, a maximum boost pressure is still provided to the exhaust, comparable to the maximum torque cycle, but at the same time minimizing the work area by delaying the combustion timing, until about the second half of the stroke or even later. Thus, in this preferred embodiment, the cylinder compresses and decompresses substantially without combustion, and only in the later phase of the expansion, combustion is provided to raise the exhaust pressure provided to the turbine. At the same time, compared to the idle mode, exhaust temperatures are increased substantially. The result is that the inlet boost pressure can be maintained at low loads so inlet pressure is readily available when a load increase is required. In this way the required load step can be achieved without the need for a large drop in lambda, so NOx production is significantly reduced.

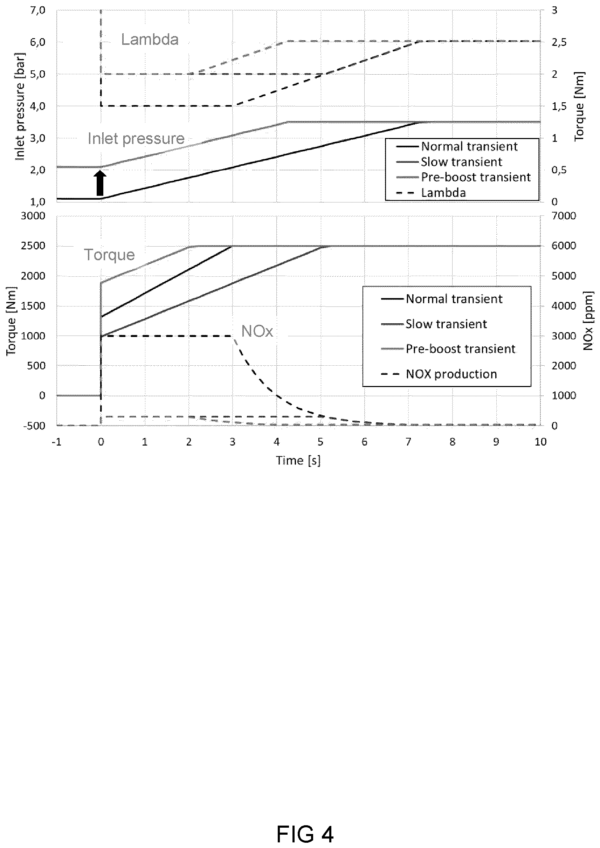

In Figure 4 two schematic diagrams are shown, showing a relation a normal transient, a slow transient and a boosted transient initiated at time t = 0 seconds. The 'slow transient' intends to keep the NOx level low by keeping lambda high, i.e. higher than 1.5. This comes at a cost of slow torque build up, which is shown to be considerably slower (more than 2 seconds) than the normal, non boosted transient, wherein higher NOx levels are accepted. At the same time lambda values drop from 2 to 1.5 , for the normal transient, until the turbo revs up, which process takes about 5 seconds, after which the lambda is restored to 2.0 and increased further to 2.5.

At low loads the normal inlet pressure is close to atmospheric pressure of 1 bar. So when a load increase is require the lambda has to be reduced to 1.5 to ensure maximum torque, leading to a NOx peak of about 3000 ppm.

For the boosted variant, lambda values remain substantially constant at 2.0 and increase to 2.5 after further revving up, resulting in lower NOx values in the transient about under 400 ppm, and substantially lower than the normal transient.

Even compared to the normal transient with high NOx levels, the delayed combustion as described above can keep inlet at elevated levels above 2 bar, which can quicker respond to maximum torque requests, to raise torque quickly without the need to reduce lambda below 2.0.

This enables both good engine response and minimal NOx production. By keeping the inlet pressure high before the torque pickup, there's no need to adapt timing to etc. during the transient itself.

## Claims

1. A hydrogen combustion engine comprising a hydrogen fuel supply, an air supply, a fuel ignition device, a combustion chamber for converting the ignited hydrogen fuel to work, an exhaust for exhausting the exhaust gases from the combustion chamber, a turbo compressor for converting the remaining exhaust pressure to increased inlet pressure of the air supply and an engine controller, wherein the engine controller is arranged to vary the ignition timing of the ignition device from an early ignition timing in full engine load condition, to a delayed ignition timing in a low engine load condition of the hydrogen combustion engine to keep the exhaust pressure at an elevated level, irrespective of low or high engine load condition.

2. A hydrogen combustion engine according to any preceding claim, wherein the fuel supply during low engine load condition is elevated compared to early ignition timing in idle engine load condition, to keep the turbocharger at elevated speeds.

3. A hydrogen combustion engine according to any preceding claim, wherein the fuel supply during low engine load condition is controlled so that work of a stroke cycle with delayed ignition timing is kept between 90 - 110 % of a work a stroke cycle in idle condition with early ignition timing.

4. A hydrogen combustion engine according to claim 1, wherein the delayed ignition timing in low engine load condition is controlled to keep the inlet pressure substantially constant.

5. A hydrogen combustion engine according to any preceding claim, wherein the delayed ignition timing is delayed more than 20 degrees with respect to the early ignition timing.

6. A hydrogen combustion engine according to any preceding claim, wherein the delayed ignition timing is delayed more than 20 degrees after top dead center.
